# EUROPÄISCHE PATENTANMELDUNG

(11) **EP 2 325 624 A1**
(43) Veröffentlichungstag der Anmeldung: **25.05.2011**
(21) Anmeldenummer: 09176330.0
(22) Anmeldetag: 18.11.2009
(51) Int. Cl.: G01N 21/77, G01N 21/86

(54) **Verfahren und Vorrichtung zur Untersuchung einer Körperflüssigkeit**

(71) Anmelder: F. Hoffmann-La Roche AG, 4070 Basel (CH); Roche Diagnostics GmbH, 68305 Mannheim (DE)
(72) Erfinder: Harttig, Dr. Hertig, 67434 Neustadt (DE); Haar, Dr. Hans-Peter, 69168 Wiesloch (DE); Werner, Dr. Gerhard, 69469 Weinheim (DE)
(74) Vertreter: Pfiz, Thomas

(57) **Zusammenfassung**

Die Anmeldung betrifft ein Verfahren und eine Vorrichtung zur Untersuchung einer Körperflüssigkeit, insbesondere für eine Blutzuckerbestimmung. Verfahrensmäßig wird ein Testelement (14) zum Einmalgebrauch in einem Testgerät (12) mit Körperflüssigkeit beaufschlagt und über ein optisches Übertragungssystem (18) an eine photometrische Messeinheit (16) optisch angekoppelt, wobei nach dem Aufbringen der Körperflüssigkeit ein zeitlicher Verlauf von Messwerten zum Nachweis eines Inhaltsstoffs der Körperflüssigkeit an dem Testelement (14) erfasst wird. Erfindungsgemäß wird vorgeschlagen, dass das Übertragungsverhalten des optischen Übertragungssystems (18) durch eine Messwerterfassung bei zwei verschiedenen Messwellenlängen kontrolliert wird.

## Beschreibung

Die Erfindung betrifft ein Verfahren zur Untersuchung einer Körperflüssigkeit, insbesondere für eine Blutzuckerbestimmung, bei welchem ein Testelement zum Einmalgebrauch in einem Testgerät mit Körperflüssigkeit beaufschlagt wird und über ein optisches Übertragungssystem an eine photometrische Messeinheit optisch angekoppelt wird, wobei nach dem Aufbringen der Körperflüssigkeit ein zeitlicher Verlauf von Messwerten zum Nachweis eines Inhaltsstoffs der Körperflüssigkeit an dem Testelement erfasst wird. Die Erfindung betrifft weiter ein entsprechendes Testsystem.

In der Praxis für Blutzuckerbestimmungen bekannte Verfahren dieser Art basieren auf Teststreifen, die als irreversibel reagierender optisches Einmalsensor aufgebaut sind. Diese sollen es durch Verarbeitung in automatischen Testgeräten auch dem Laien ermöglichen, die Messung von Blutglucose mit hinreichender Genauigkeit, wie sie die medizinische Behandlung der mannigfaltigen Formen von Diabetes erfordert. Insbesondere bei Diabetes Typ 1 und auch Typ 2, soweit mit Insulin therapiert, ist die Qualität der Messung von besonderer Bedeutung. Der Messablauf sieht vor, dass nach Aufbringen einer Blutprobe auf den Tststreifen die Analytkonzentration durch wiederholte photometrische Messungen ermittelt wird. Dabei ist es wichtig, dass das disposible Reagenzträgersystem während des gesamten Abtastvorgangs z.B. über 4 bis 10 Sekunden nicht bewegt wird, um die Messung nicht zu stören.

Ausgehend hiervon liegt der Erfindung die Aufgabe zugrunde, die im Stand der Technik bekannten Verfahren und Vorrichtungen und insbesondere die Qualität und Genauigkeit des Messprozesses weiter zu verbessern, wobei auch der apparative Aufwand begrenzt und dabei für ein kompaktes System außerhalb einer Laborumgebung angemessen sein soll.

Zur Lösung dieser Aufgabe wird die in den unabhängigen Patentansprüchen angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, durch eine Kontrollmessung eine Zusatzinformation über die optische Übertragungsstrecke zwischen dem Testdisposable und der reflexionsphotometrischen Messeinheit zu gewinnen. Dementsprechend wird erfindungsgemäß vorgeschlagen, dass das Übertragungsverhalten des optischen Übertragungssystems durch eine Messwerterfassung bei zwei verschiedenen Messwellenlängen kontrolliert wird. Damit ist es möglich, den Zustand der opto-mechanischen Ankopplung des Testelements im Zuge des Messvorgangs zu überwachen, so dass die Gültigkeit und Genauigkeit des Ergebnisses noch besser gewährleistet werden kann. Dies ist vor allem auch bei solchen Systemen wichtig, die mit geringen Probenmengen arbeiten und dabei relativ kleine Abmessungen im Bereich der optischen Ankopplung aufweisen.

Vorteilhafterweise wird aus einem wellenlängenabhängigen Vergleich der Messwerte ein Unterschied im Übertragungsverhalten des optischen Übertragungssystems vor und nach dem Aufbringen der Körperflüssigkeit ermittelt, wobei nach Maßgabe des ermittelten Unterschieds eine Messwertkorrektur durchgeführt oder das Testergebnis verworfen wird.

Eine weitere vorteilhafte Ausführung sieht vor, dass die beiden Messwellenlängen in einem für den Nachweis des Inhaltsstoffs nutzbaren Absorptionsbereich des Testelements vorzugsweise nicht mehr als 50nm entfernt voneinander liegen. Durch eine solche schmalbandig aufgelöste Anregung kann sichergestellt werden, dass das Übertragungssystem bei beiden Messwellenlängen im Wesentlichen dieselben optischen Eigenschaften besitzt.

Denkbar ist es aber auch, dass eine Messwellenlänge in einem für Nachweis des Inhaltsstoffs nutzbaren Absorptionsbereich des Testelements liegt und die andere Messwellenlänge gleichsam als Matrixwert außerhalb davon. Durch den Matrixwert ist es möglich, optische Störungen unbeeinflusst von dem Reaktionssystem für den Nachweis zu kontrollieren. Andererseits muss aber hingenommen werden, dass wellenlängenabhängige Störeinflüsse asymmetrisch in beiden Messkanälen zum Tragen kommen können.

Um noch vor dem Probenauftrag eine Zustandsinformation zu gewinnen, ist es von Vorteil, wenn durch eine Messung vor dem Aufbringen der Körperflüssigkeit auf das Testelement ein Trockenleerwert als Maß für das anfängliche Übertragungsverhalten des optischen Übertragungssystems erfasst wird.

Eine weitere Verbesserung sieht vor, dass aus dem Zeitverlauf der Messwerte bei den beiden Messwellenlängen ein Referenzwert für das Übertragungsverhalten des optischen Übertragungssystems zu einem Startzeitpunkt nach dem Aufbringen der Körperflüssigkeit extrapoliert wird. Hierbei ist es auch vorteilhaft, wenn der Referenzwert bei Unterschreiten einer vorgegebenen maximalen Toleranzabweichung von dem Trockenleerwert zur Offset-Korrektur der Messwerte herangezogen wird.

Zur weiteren Steigerung der Messgenauigkeit können die wellenlängenabhängig erfassten Messwerte vorzugsweise durch Verhältnisbildung miteinander korreliert werden, so dass bei beiden Messwellenlängen einwirkende Störungen eliminiert werden.

Um einen direkten Bezug zwischen beiden Messkanälen herstellen zu können, ist es vorteilhaft, wenn die Messwerte über eine vorgegebene Messdauer intervallweise bei beiden Messwellenlängen im Wesentlichen zeitgleich erfasst werden.

Auch hinsichtlich einer apparativen Vereinfachung ist es von besonderem Vorteil, wenn die Messwellenlängen durch Einstrahlung von spektral aufgelöstem Anregungslicht vorzugsweise mittels Leuchtdioden definiert werden. Auf diese Weise kann auf aufwändige Filtersysteme im Strahlengang verzichtet werden.

Der Einsatz der Zweiwellenlängenmessung ist besonders in einer solchen Messumgebung günstig, in der im Zuge des Aufbringens der Körperflüssigkeit auf das Testelement mindestens ein Teil des optischen Übertragungssystems bewegt und/oder verformt wird.

Im Hinblick auf ein Messsystem wird zur Lösung der eingangs genannte Aufgabe vorgeschlagen, dass die Messeinheit dazu eingerichtet ist, das Übertragungsverhalten des optischen Übertragungssystems durch eine Messwerterfassung bei zwei verschiedenen Messwellenlängen zu kontrollieren. Hierbei ergeben sich die bereits in verfahrensmäßiger Hinsicht oben angeführten Vorteile gleichermaßen.

Im Hinblick auf die räumliche Trennung zwischen Messort und Probenapplikationsstelle ist es vorteilhaft, wenn das optische Übertragungssystem mindestens einen in dem Testgerät und/oder in dem Testelement integrierten Lichtleiter umfasst.

Vorteilhafterweise besitzt das optische Übertragungssystem eine opto-mechanische Kopplungseinrichtung zur geräteseitigen Halterung und gleichzeitigen optischen Ankopplung des Testelements.

Eine weitere bauliche Verbesserung lässt sich dadurch erreichen, dass die Messeinheit einen als Doppelstrahler bei zwei Messwellenlängen emittierenden Lichtsender aufweist, und dass ein Strahlkombinator das von dem Lichtsender vorzugsweise mittels zwei diskreten Leuchtdioden ausgestrahlte Anregungslicht einheitlich bündelt.

Im Folgenden wird die Erfindung anhand der in der Zeichnung schematisch dargestellten Ausführungsbeispiele näher erläutert. Es zeigen
- Fig. 1: ein Testsystem zur Blutzuckermessung mit einem Handgerät und einem darin eingesetzten Teststreifen in schaubildlicher Darstellung;
- Fig. 2: eine photometrische Messeinheit mit einem optischen Übertragungssystem für eine Zweiwellen- längenmessung an dem Teststreifen in Draufsicht;
- Fig. 3: einen Strahlkombinator zur gleichmäßigen Einspeisung des Anregungslichts in perspektivischer Ansicht;
- Fig. 4: ein Diagramm einer Absorptionsbande des mit Blut benetzten Teststreifens bei verschiedenen Blutzuckerkonzentrationen;
- Fig. 5: einen Zeitverlauf von Remissions-Messwerten bei zwei Blutzuckerkonzentrationen und jeweils zwei Messwellenlängen.

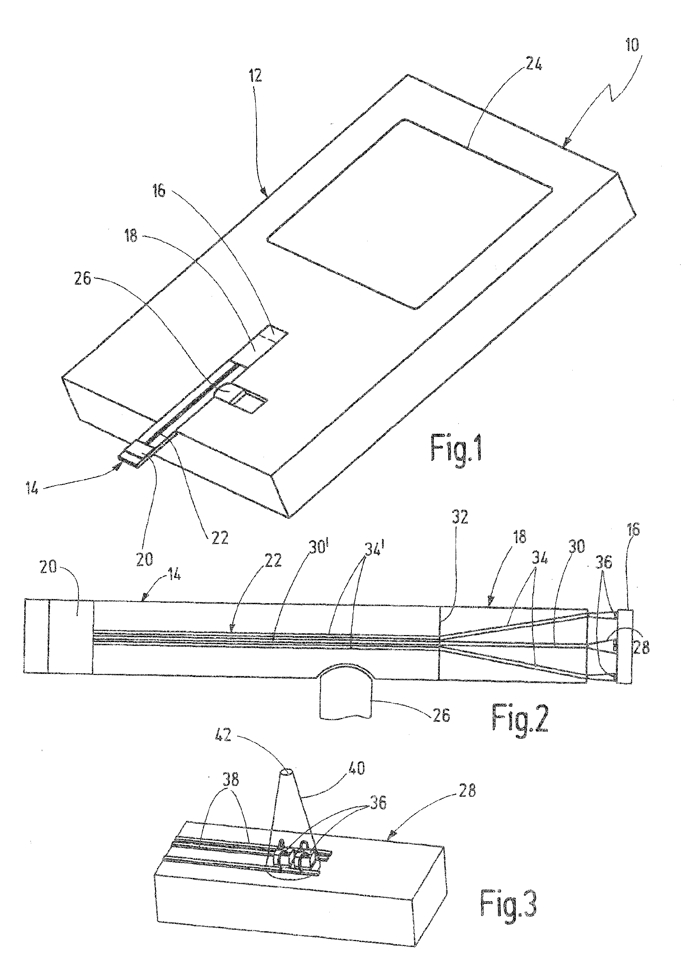

Das in Fig. 1 dargestellte Testsystem 10 umfasst ein tragbares Testgerät 12 und darin einsetzbare Testelemente 14 für jeweils einen Einmaltest an einer Flüssigprobe, speziell zur Glukosebestimmung in einer Blutprobe. Zu diesem Zweck weist das Testgerät 12 eine photometrische Messeinheit 16 und ein optisches Übertragungssystem 18 zur optischen Ankopplung des aktiv eingesetzten Testelements 14 auf, wobei das Testelement 14 in Form eines Teststreifens mit einem trockenchemischen Testfeld 20 und einer darauf ausgerichteten Lichtleiteranordnung 22 als Teil des Übertragungssystems 18 ausgebildet ist. Um Zustandsänderungen der optischen Ankopplung zu erkennen und das Übertragungsverhalten des Übertragungssystems 18 zu überprüfen, ist die Messeinheit 16 dazu eingerichtet, die Messwerte paarweise bei zwei verschiedenen Messwellenlängen zu erfassen. Das daraus ermittelte Messergebnis kann beispielsweise in Form einer digitalen Konzentrationsangabe auf dem Display 24 dargestellt werden.

Das in Gebrauch befindliche Testelement 14 kann unter gleichzeitiger Herstellung der optischen Verbindung mechanisch beispielsweise über eine formschlüssige Kopplungseinheit 26 an das Testgerät angedockt werden. Für einen Einmaltest kann das Testfeld 20 von einem Benutzer mit einer geringen Menge an Kapillarblut beaufschlagt werden, die in einer trockenchemischen Reagenzschicht aufgenommen wird und in Abhängigkeit von der Glukosekonzentration durch eine an sich bekannte enzymselektive Reaktion zu einer photometrisch messbaren Farbänderung führt.

Zweckmäßig werden die Testelemente 14 aus einem nicht gezeigten Magazin für den Benutzer bereitgestellt und gegebenenfalls entsorgt. Grundsätzlich ist es möglich, dass hierfür ein Testband zum Einsatz kommt, wobei die darauf befindlichen Testfelder durch Bandtransport positioniert werden. Denkbar ist auch der Einsatz integrierter Testelemente, welche die Probengewinnung, Applikation auf das Testfeld und optische Ankopplung in einem automatischen Bewegungsablauf vereinen, wie es in der Patentanmeldung EP-A 09159834 beschrieben ist, worauf hier Bezug genommen wird. Neben der Blutzuckerbestimmung kommen auch andere Untersuchungen von Zielanalyten in einer Körperflüssigkeit, beispielsweise Gewebeflüssigkeit in Frage.

Allen diesen Systemen gemeinsam ist, dass durch eine geräteseitige Aktuation oder benutzerseitige Eingriffe im Zuge der Bereitstellung des Testelements die Randbedingungen für die Messung unbeabsichtigt veränderlich sind. Beispielsweise kann der Probenauftrag durch Andrücken eines Körperteils auf das Testfeld 20 zu einer ungewollten Verformung oder Verschiebung des Übertragungssystems 18 führen. Hinzu kommt, dass die Erfassung der Messwerte zum Startzeitpunkt der Probenapplikation unsicher bzw. ungenau ist, weil die Testfeldbenetzung nicht schlagartig homogen erfolgt und die optischen Eigenschaften sich ändern. Um hier Abhilfe zu schaffen, kann durch die weiter unten näher erläuterte Zweiwellenlängenmessung die erforderliche Messgenauigkeit und Robustheit gegen Störungen insbesondere des opto-mechanischen Anschlusses mit geringem apparativem Aufwand sichergestellt werden.

Fig. 2 veranschaulicht den optischen Übertragungsweg bzw. Strahlengang zwischen der Messeinheit 16 und dem Testfeld 20 des angedockten Testelements 14. Ein als Doppelstrahler bei zwei verschiedenen Messwellenlängen emittierender Lichtsender 28 strahlt das Anregungslicht in einen zentralen Lichtleiter 30 des optischen Übertragungssystems 18 ein. Über die optische Schnittstelle 32 wird das Anregungslicht in den mittleren Lichtleiter 30' der im Testelement integrierten Lichtleiteranordnung 22 übertragen und an deren freiem Ende nach oben auf die Rückseite des Testfelds 20 reflektiert bzw. gestreut. Das von dem Testfeld 20 remittierte Messlicht gelangt über die äußeren Lichtleiter 34', 34 auf die Lichtempfänger 36 der Messeinheit, wobei durch die beiden Empfangskanäle auch eine Benetzungskontrolle des Testfelds 20 möglich ist. Durch die mechanische Kopplungseinheit 26 soll neben der lagerichtigen Positionierung des Testelements 14 an der Schnittstelle 32 auch eine zuverlässige optische Verbindung geschaffen bzw. aufrechterhalten werden.

Wie aus Fig. 3 ersichtlich, kann der Lichtsender 28 durch zwei Leuchtdioden 36 verwirklicht werden, die über getrennte Strompfade 38 gesondert ansteuerbar sind. Die nahezu monochrom bei voneinander verschiedenen Wellenlängen und somit spektral aufgelöst emittierenden Leuchtdioden 36 sind in einen Reflektorkegel 40 aus einem transparenten Kunststoff eingebettet, der somit als Strahlkombinator das ausgestrahlte Licht einheitlich und gleichmäßig durchmischt auf den Austrittsquerschnitt 42 bündelt.

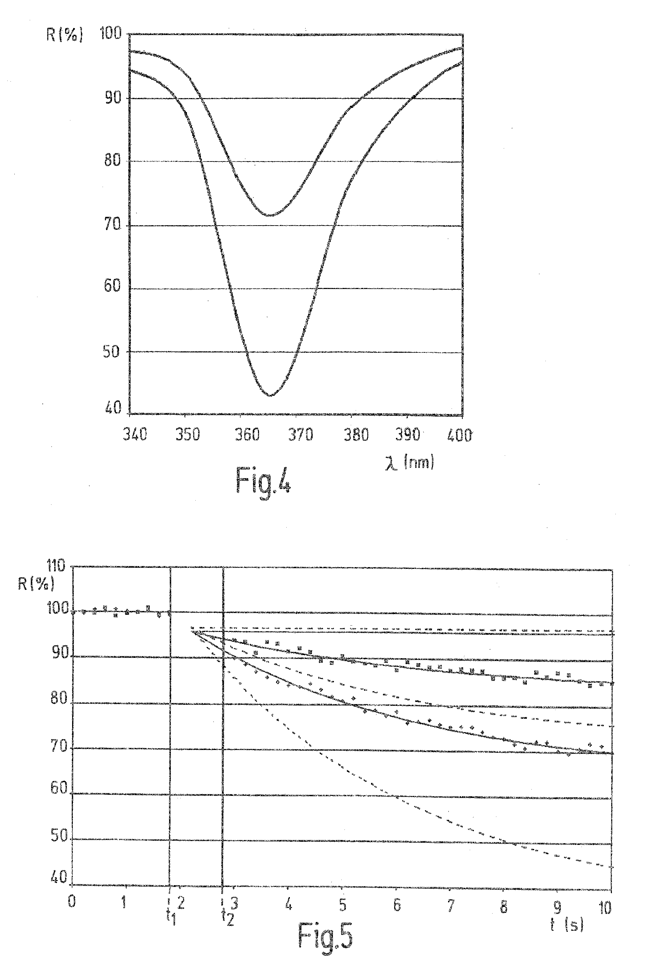

Fig. 4 zeigt eine grafische Darstellung von Absorptionsbanden des mit Blut benetzten Testfeldes bei zwei verschiedenen Glukosekonzentrationen. Dargestellt ist die diffuse Reflexion bzw. Remission R in Abhängigkeit von der Wellenlänge λ zu einem gegebenen Zeitpunkt nach dem Probenauftrag. Die obere Kurve zeigt den Spektralverlauf für eine Glukosekonzentration von 100 mg/dl und die untere Kurve für eine Glukosekonzentration von 300 mg/dl. Die beiden Messwellenlängen liegen bei 365nm und 375nm innerhalb des für den Nachweis bzw. die Konzentrationsbestimmung nutzbaren sorptionsbereichs. Die Messwellenlängen sind dabei so gewählt, dass deutliche Remissionsunterschiede in der Absorptionsbande beobachtet werden, während das Übertragungsverhalten des optischen Übertragungssystems weitgehend unabhängig von der geringen Wellenlängendifferenz bleibt. Grundsätzlich ist es aber auch denkbar, dass eine Kontrollwellenlänge außerhalb der Absorptionsbande weit entfernt von der Messwellenlänge innerhalb der Absorptionsbande gewählt wird.

Fig. 5 zeigt die entsprechend dem Absorptionsspektrum nach Fig. 4 unter Verwendung eines Messsystems nach Fig. 2 gewonnenen zeitlichen Intensitätsverläufe für zwei Glukosekonzentrationen. In dem Diagramm dargestellt ist die auf 100% normierte Remission R über der Zeit t. Dabei wurde das anfänglich trockene Testfeld 20 zu einem Zeitpunkt t1 mit einer Blutprobe beladen und in Zeitintervallen von 200 ms paarweise nahezu zeitgleich bei zwei verschiedenen Messwellenlängen abgetastet. Aufgrund der erwähnten Messprobleme bei unvollständiger Benetzung und Reflektionsänderung sind in dem durch senkrechte Linien markierten Zeitbereich zwischen t1 und t2 keine gültigen Messwerte erhältlich. In dem Diagramm zeigen die Rautensymbole Messwerte bei 365nm und die Quadratsymbole bei 375nm für eine Glukosekonzentration von 100 mg/dl, während die durchgezogenen Kurven entsprechende Anpassungen an diese Werte darstellen. Für die zweite Glukosekonzentration von 300 mg/dl sind der besseren Übersichtlichkeit halber nur die angepassten Exponentialkurven gestrichelt dargestellt.

Im Folgenden wird der Messablauf und die Auswertung anhand des Diagramms gemäß Fig. 5 näher erläutert. Zunächst wird vor dem Aufbringen der Blutprobe aus den Messwerten im Zeitbereich zwischen 0 und t1 ein Trockenleerwert als Maß für das anfängliche Übertragungsverhalten des Übertragungssystems 18 erfasst bzw. ermittelt. Sofern bei dieser Plausibilitätsprüfung der Trockenleerwert von einem vorgegebenen Chargenwert beispielsweise um mehr als 10% abweicht, wird bereits ein Fehlerfall erkannt und der Messvorgang abgebrochen.

Sodann erfolgt der Probenauftrag und die intervallweise Messewertabtastung bei beiden Messwellenlängen bis zu einer Endzeit von beispielsweise 10s. Wie sich aus dem Diagramm nach Fig. 5 deutlich ergibt, kann aus dem Zeitverlauf der Messwerte bei den beiden Messwellenlängen ein Referenzwert für das Übertragungsverhalten des optischen Übertragungssystems zu einem Startzeitpunkt nach dem Aufbringen der Körperflüssigkeit extrapoliert werden. Dabei werden mittels eines Mikroprozessors der Messeinheit 16 mit vorgegebenen Funktionen Kurvenanpassungen und Extrapolationen durchgeführt. Der Referenzwert ist durch den Schnittpunkt der beiden Fitkurven bestimmt und in dem Diagramm durch eine horizontale Linie repräsentiert.

Sofern eine vorgegebene maximale Toleranzabweichung beispielsweise von 5% von dem Trockenleerwert unterschritten wird, kann der Referenzwert für eine Offset-korrektur der Messwerte herangezogen werden. Der Intensitätsverlauf wird dann nicht mehr auf den Trockenleerwert, sondern auf den abgesenkten Referenzwert bezogen. Hierbei ist zu berücksichtigen, dass durch den Trocken-Nass-Übergang des Testfelds 20 ein Sprung im Remissionsverhalten auftritt, der hinreichend konstant sein sollte.

Wird hingegen eine zu hohe Differenz zwischen dem Trockenleerwert und dem Referenzwert festgestellt, kann auf ein fehlerhaftes Übertragungsverhalten des Übertragungssystems 18 geschlossen werden. In diesem Fall wird die Messung verworfen und eine Fehleranzeige ausgegeben.

Es versteht sich, dass aus dem Intensitätsverlauf bei nur einer Wellenlänge kein Rückschluss auf den Referenzwert im Zeitbereich zwischen t1 und t2 getroffen werden kann, da Veränderungen in der optischen Ankopplung und probenseitige Randbedingungen wie Hämatokritwert und Temperatur zu einer Remissionsveränderung führen können. Dies wird in dem Diagramm nach Fig. 5 auch ersichtlich aus dem gestrichelten Intensitätsverlauf für die höhere Glukosekonzentration von 300 mg/dl, bei der ein höherer Referenzwert erfasst wurde.

Um bei beiden Messwellenlängen gleichermaßen einwirkende Störungen zu berücksichtigen, kann durch Verhältnisbildung der in jeweils einem Messintervall gewonnenen Messwertpaare (R(365nm)*C)/(R(375nm)*C) ein Störfaktor C rechnerisch eliminiert werden.

Grundsätzlich ist es möglich, auf die Trockenleerwertmessung zu verzichten und für die Messwertkorrektur nur den Referenzwert zu berücksichtigen. Es können analytische Funktionen (z.B. Exponentialfunktionen oder Polynome) vorgeben werden, deren Parameter den Messwerten anpasst werden, um daraus die Glucosekonzentration zu berechnen. Möglich ist es auch, Wertetabellen für verschiedene Glucosewerte vorzugeben und die beste Anpassung der Messwerte zu bestimmen. Die Tabellen- bzw. Parameterzuordnung kann durch chargenabhängig Codierung erfolgen. Die Temperatur des Messsystems kann zusätzlich erfasst und bei der Auswertung mit einbezogen werden. In jedem Fall sind die genaue Bestimmung des Startzeitpunktes und der zugehörigen optischen Messwerten wichtig für die genaue Bestimmung des Glucosewertes.

Denkbar ist es auch, dass eine der beiden Messwellenlängen so gewählt wird, dass die dort gewonnenen Kontrollsignale sensitiver auf Übertragungsstörungen reagieren als das eigentliche Messsignal bei der anderen Wellenlänge. Dabei kann das Übertragungsverhalten des optischen Übertragungssystems für die Messwellenlänge optimiert werden. Möglich ist es auch, neben der wellenlängenabhängigen Zustandsmessung weitere Signaleigenschaften heranzuziehen, insbesondere die Polarisation und/oder eine Impulsform der Ein- und Auskopplungssignale in das Übertragungssystem.

## Patentansprüche

1. Verfahren zur Untersuchung einer Körperflüssigkeit, insbesondere für eine Blutzuckerbestimmung, bei welchem ein Testelement (14) zum Einmalgebrauch in einem Testgerät (12) mit Körperflüssigkeit beaufschlagt wird und über ein optisches Übertragungssystem (18) an eine photometrische Messeinheit (16) optisch angekoppelt wird, wobei nach dem Aufbringen der Körperflüssigkeit ein zeitlicher Verlauf von Messwerten zum Nachweis eines Inhaltsstoffs der Körperflüssigkeit an dem Testelement (14) erfasst wird, **dadurch gekennzeichnet, dass** das Übertragungsverhalten des optischen Übertragungssystems (18) durch eine Messwerterfassung bei zwei verschiedenen Messwellenlängen kontrolliert wird.

2. Verfahren nach Anspruch 1, **dadurch gekennzeichnet, dass** aus einem wellenlängenabhängigen Vergleich der Messwerte ein Unterschied im Übertragungsverhalten des optischen Übertragungssystems (18) vor und nach dem Aufbringen der Körperflüssigkeit ermittelt wird, und dass nach Maßgabe des ermittelten Unterschieds eine Messwertkorrektur durchgeführt oder das Testergebnis verworfen wird.

3. Verfahren nach Anspruch 1 oder 2, gekennzeichnet, dass die beiden Messwellenlängen in einem für den Nachweis des Inhaltsstoffs nutzbaren Absorptionsbereich des Testelements (14) vorzugsweise nicht mehr als 50nm entfernt voneinander liegen.

4. Verfahren nach einem der Ansprüche 1 bis 3, **dadurch gekennzeichnet, dass** eine Messwellenlänge in einem für den Nachweis des Inhaltsstoffs nutzbaren Absorptionsbereich des Testelements (14) liegt und die andere Messwellenlänge außerhalb davon.

5. Verfahren nach einem der Ansprüche 1 bis 4, **dadurch gekennzeichnet, dass** durch eine Messung vor dem Aufbringen der Körperflüssigkeit auf das Testelement (14) ein Trockenleerwert als Maß für das anfängliche Übertragungsverhalten des optischen Übertragungssystems (18) erfasst wird.

6. Verfahren nach einem der Ansprüche 1 bis 5, dagekennzeichnet, dass aus dem Zeitverlauf der Messwerte bei den beiden Messwellenlängen ein Referenzwert für das Übertragungsverhalten des optischen Übertragungssystems (18) zu einem Startzeitpunkt nach dem Aufbringen der Körperflüssigkeit extrapoliert wird.

7. Verfahren nach Anspruch 6, **dadurch gekennzeichnet, dass** der Referenzwert bei Unterschreiten einer vorgegebenen maximalen Toleranzabweichung von dem Trockenleerwert zur Offset-Korrektur der Messwerte herangezogen wird.

8. Verfahren nach einem der Ansprüche 1 bis 7, dasdurch gekennzeichnet, dass die wellenlängenabhängig erfassten Messwerte vorzugsweise durch Verhältnisbildung miteinander korreliert werden, so dass bei beiden Messwellenlängen einwirkende Störungen eliminiert werden.

9. Verfahren nach einem der Ansprüche 1 bis 8, dasgekennzeichnet, dass die Messwerte über eine vorgegebene Messdauer intervallweise bei beiden Messwellenlängen im Wesentlichen zeitgleich erfasst werden.

10. Verfahren nach einem der Ansprüche 1 bis 9, **dadurch gekennzeichnet, dass** die Messwellenlängen durch Einstrahlung von spektral aufgelöstem Anregungslicht vorzugsweise mittels Leuchtdioden (36) definiert werden.

11. Verfahren nach einem der Ansprüche 1 bis 10, dagekennzeichnet, dass im Zuge des Aufbringens der Körperflüssigkeit auf das Testelement (14) mindestens ein Teil des optischen Übertragungssystems (18) bewegt und/oder verformt wird.

12. Vorrichtung zur Untersuchung einer Körperflüssigkeit, insbesondere für eine Blutzuckerbestimmung, mit einem eine photometrische Messeinheit (16) aufweisenden, vorzugsweise tragbaren Testgerät (12) und einem über ein optisches Übertragungssystem (18) an die Messeinheit (16) ankoppelbaren Testelement (14), das für einen Einmaltest mit Körperflüssigkeit beaufschlagbar ist, **dadurch gekennzeichnet, dass** die Messeinheit (16) dazu eingerichtet ist, das Übertragungsverhalten des optischen Übertragungssystems (18) durch eine Messwerterfassung bei zwei verschiedenen Messwellenlängen zu kontrollieren.

13. Vorrichtung nach Anspruch 12, **dadurch gekennzeichnet, dass** das optische Übertragungssystem (18) mindestens einen in dem Testgerät (12) und/oder in dem Testelement (14) integrierten Lichtleiter (22;30,34) umfasst.

14. Vorrichtung nach Anspruch 12 oder 13, **dadurch gekennzeichnet, dass** das optische Übertragungssystem (18) eine opto-mechanische Kopplungseinrichtung (26,32) zur geräteseitigen Halterung und optischen Ankopplung des Testelements (14) aufweist.

15. Vorrichtung nach einem der Ansprüche 12 bis 14, **dadurch gekennzeichnet, dass** die Messeinheit (16) einen als Doppelstrahler bei zwei Messwellenlängen emittierenden Lichtsender (28) aufweist, und dass ein Strahlkombinator(40) das von dem Lichtsender (28) vorzugsweise mittels zwei Leuchtdioden (36) ausgestrahlte Anregungslicht einheitlich bündelt.
